# EUROPÄISCHE PATENTSCHRIFT

(11) **EP 1 929 267 B1**
(45) Veröffentlichungstag und Bekanntmachung des Hinweises auf die Patenterteilung: **11.02.2009**
(21) Anmeldenummer: 06818010.8
(22) Anmeldetag: 29.09.2006
(51) Int. Cl.: G01N 1/00, G12B 21/24, G12B 21/22, G12B 5/00

(54) **Verfahren und Vorrichtung zum Positionieren eines verlagerbaren Bauteils in einem Untersuchungssystem**
Method and device for positioning a movable part in a test system
Procédé et dispositif pour positionner un composant mobile dans un système de récherche

(30) Priorität: 29.09.2005 DE 102005047729
(43) Veröffentlichungstag der Anmeldung: 11.06.2008
(73) Patentinhaber: JPK Instruments AG, 12435 Berlin (DE)
(72) Erfinder: KNEBEL, Detlef, Dr., 12305 Berlin (DE); JÄHNKE, Torsten, 12439 Berlin (DE)
(74) Vertreter: Bittner, Thomas L.
(86) Internationale Anmeldenummer: PCT/DE2006/001722
(87) Internationale Veröffentlichungsnummer: WO 2007/036222

(56) Entgegenhaltungen:
- EP-A- 0 935 137
- DE-A1- 4 204 632
- US-A- 5 979 070
- US-B1- 6 291 822

## Beschreibung

Die Erfindung betrifft ein Verfahren und eine Vorrichtung zum Positionieren eines verlagerbaren Bauteils in einem Untersuchungssystem, insbesondere einem Meß- oder Analysesystem.

### Hintergrund der Erfindung

Das Positionieren von Bauteilen erfolgt üblicherweise mit Hilfe eines Stellelementes, welches dazu dient, eine Bewegung eines verlagerbaren Bauteils gegenüber einem anderen Bauteil zu bewirken, welches bei der Verlagerung seinerseits in Ruhe verbleibt. In einem Untersuchungssystem kann das bei der Verlagerung des verlagerbaren Bauteils unbewegte Bauteil auch als eine Art Gestell betrachtet werden, weshalb diese Bezeichnung im folgenden auch verwendet wird.

Bei einem Untersuchungssystem handelt es sich im Sinne der vorliegenden Anmeldung um eine Anlage, einen Apparat oder eine Vorrichtung, die geeignet ist, ein Untersuchungsobjekt hinsichtlich wenigstens einer Eigenschaft physikalischer, chemischer oder biologischer Art zu erforschen der zu untersuchen. Solche Systeme werden häufig auch dem Gebiet des sogenannten wissenschaftliche Gerätebaus zugeordnet. Sie sind zumindest in Teilen geprägt durch feinmechanische Bauteile, insbesondere was die exakte Verlagerung von verlagerbaren Bauteilen betrifft.

Für Stellelemente, die mit einer hohen Ortsauflösung arbeiten sollen, werden beispielsweise piezoelektrisch betriebene Stellelemente, die auch als Piezoelemente bezeichnet werden, als Aktoren benutzt, deren Ausdehnung abhängig von einer angelegten elektrischen Spannung ist. Aber auch andere Stellelemente sind als solche im Stand der Technik bekannt, beispielsweise hydraulisch oder induktiv betriebene Stellelemente. Bei den bekannten Piezoelementen wird ein eine Verlagerung eines Bauteils tatsächlich verursachendes Aktorelement beispielsweise mittels Einstellen einer Spannung zu einem vorbestimmten Ort verfahren und verharrt dort. Da Piezoelemente eine Hysterese aufweisen, d. h. die Ausdehnung bei einer bestimmten Spannung ist abhängig vom Ausgangspunkt der Verlagerungsbewegung, und darüber hinaus sich noch einige Zeit nach dem Abschalten der Spannung bewegen, was auch als Creeping bezeichnet wird, ist beim Betrieb des Piezoelementes mit einer Spannungsansteuerung die tatsächliche Auslenkung des Piezoelementes oder des verlagerbaren Bauteils zu messen und mit einer geschlossenen Schleifenregelung dafür zu sorgen, daß die Ausdehnung des Piezoelementes linear zur angelegten Spannung erfolgt. Die Güte der Linearität ist hierbei natürlich abhängig von der Art eines gewählten Abstandssensors, bei dem es sich zum Beispiel um einen kapazitiven Sensor, ein LVDT *("Linear Variable Differential Transformer")* oder einen Dehnungsmeßstreifen handeln kann. Aber auch andere Abstandssensoren sind nutzbar, beispielsweise optische Sensoren. Korrekturen mittels Softwareregelungen sind bei bekannten Ausführungen regelmäßig fehlerbehaftet.

Das zu verlagernde Bauteil kann entweder fest mit dem Aktorelement verbunden sein, beispielsweise mittels Klebung, oder es ist ein Gelenk gebildet, mit dem das verlagerbare Bauteil an das andere Bauteil, welches bei der Verlagerung örtlich fixiert bleibt, verbunden ist. Beispielsweise wird ein Festkörpergelenk verwendet. Hierbei können dann Piezoelemente zwischen den Teilen des Festkörpergelenkes eingeklemmt oder in anderer Art an diesen befestigt sein, die Verlagerungsbewegung mittels Ausfahren oder Einfahren des Gelenkes zu initiieren.

Häufig wird darüber hinaus ein Übersetzungsmechanismus genutzt, um die von einer Antriebseinrichtung des Stellelementes erzeugte Antriebsbewegung für die Verlagerung des verlagerbaren Bauteils umzusetzen. Auf diese Weise werden Verlagerungswege erreicht, die größer als das Ausmaß oder ein Hub der Antriebsbewegung selbst sind.

Im Sinne der vorliegenden Anmeldung handelt es sich um einen direkten Antrieb für die Verlagerungsbewegung, wenn die Verlagerung des verlagerbaren Bauteils aus einer Ausgangsstellung in eine Endstellung erreicht wird, indem ein an das verlagerbare Bauteil gekoppeltes Aktorelement zwischen einer eingefahrenen Stellung, in welcher das Aktorelement wenigstens teilweise eingefahren ist, und einer ausgefahrenen Stellung verlagert wird, in welcher das Aktorelement wenigstens teilweise ausgefahren ist. Ein solcher direkter Antrieb kann beispielsweise mit Hilfe des Piezoelementes zur Verfügung gestellt werden.

Im Unterschied hierzu sind auch indirekte Antriebe bekannt. Hierzu gehört beispielsweise das Verlagern des verlagerbaren Bauteils, indem ein mit einem Gewinde versehenes und an das verlagerbare Bauteil gekoppeltes Stellelement mittels Drehen einer Schraube in dem Gewinde verlagert wird. Das Stellelement wird so längs der schraube bewegt. Derartige indirekte Anbindungen führen allerdings in der Regel zu verminderter Dynamik und erhöhte Ungenauigkeit der Positionierung.

Die Nutzung eines direkten Antriebes bekannter Bauart führt jedoch auch zu nachteiligen Wirkungen. Das zur Positionsfindung notwendige Verfahren des Aktorelementes muß in der Endstellung aufrechterhalten werden. Für ein Piezoelement bedeutet dies, daß aufgrund des Nachlaufens nach dem Einstellen der Spannung (Creeping) die angelegte Spannung noch variiert werden muß. Die Auslenkung des Aktorelementes ist darüber hinaus mit einem Rauschen verbunden. Beispielsweise benötigt ein Piezoelement eine Spannungsquelle, deren Rauschen zwar minimiert aber niemals völlig unterdrückt werden kann. Dieses Rauschen sorgt dafür, daß die Position des verlagerbaren Bauteils in der Endstellung um einen Sollwert schwankt. Wird die Endstellung zusätzlich noch mit Hilfe eines Sensors überwacht, dessen Signale für eine Regelung verwendet werden, kann auch die Auflösung des Sensors eine Begrenzung der Positioniergenauigkeit darstellen.

Darüber hinaus bleibt das zu verlagernde Bauteil auch in der Endstellung über ein schwingungsfähiges System, zu dem auch das Aktorelement gehört, mit dem Gestell verbunden. Ist das zu verlagernde Bauteil beispielsweise auf das Aktorelement aufgeklebt oder in anderer Form direkt befestigt, stellt das Aktorelement selbst ein Feder-Masse-System dar. Werden dem Gesamtsystem störende Bewegungen aufgeprägt, so wird dies zu Problemen führen, wenn das Spektrum dieser Störungen in der Nähe oder oberhalb einer Resonanzfrequenz des Gesamtsystems liegt. Es kommt dann zu Relativbewegungen der Bauteile zueinander.

Die beschriebenen Probleme treten insbesondere bei Meß- und Analyseeinrichtungen auf, zum Beispiel bei einem Rastersondenmikroskop. Hier werden dann sowohl die Auflösung als auch die Dynamik des Mikroskops limitiert. In einem solchen Mikroskop werden in der Regel Stellelemente für alle drei Raumrichtungen genutzt. Die Ungenauigkeit der Stellelemente aufgrund von Rauschquellen begrenzt die Meßmöglichkeiten. So ist zum Beispiel bei einem lateralen Abtastbereich von 100µm x 100µm eine atomare Auflösung oft nicht möglich, da die Spannungsquellen der Piezoelemente rauschen. Im Fall einer Regelung addiert sich auf das Regelungssignal noch das Rauschen des für die Abstandsmessung genutzten Sensors. Das Stellelement hat demnach eine gewisse Ortsunschärfe, die für das vorangehend genannte Beispiel etwa 0,3nm beträgt. Die Dynamik wird insbesondere durch die Größe der benötigten Piezoelemente oder eine entsprechend gewählte Übersetzung bestimmt, so daß für einen gewünschten Abtastbereich die Geschwindigkeit nicht beliebig erhöht werden kann. Wenn eine höhere Auflösung oder eine höhere Bandbreite gewünscht sind, muß dann der Abtastbereich verkleinert werden.

Im Dokument US 6291822 werden die Aktorelemente in einer Flüßigkeit bewegt, um den Einfluß ihrer Resonanzfrequenzen zu vermindern.

### Zusammenfassung der Erfindung

Aufgabe der Erfindung ist es, ein Verfahren und eine Vorrichtung zum Positionieren eines verlagerbaren Bauteils in einem Untersuchungssystem zu schaffen, bei denen die Genauigkeit der Fixierung des verlagerbaren Bauteils in der Endstellung verbessert ist.

Diese Aufgabe wird erfindungsgemäß durch ein Verfahren zum Positionieren eines verlagerbaren Bauteils in einem Untersuchungssystem nach dem unabhängigen Anspruch 1 und eine Vorrichtung zum Positionieren eines verlagerbaren Bauteils in einem Untersuchungssystem nach dem unabhängigen Anspruch 11 gelöst.

Die Erfindung umfaßt den Gedanken, ein verlagerbares Bauteil in einer Endstellung, in welche es mittels Bewegen eines an das verlagerbare Bauteil gekoppelten Aktorelementes gelangt ist, festzustellen, was auch als Arretieren oder Fixieren bezeichnet werden kann, indem ein mit dem verlagerbaren Bauteil in Verbindung stehendes Feststellbauteil in einem Vorrat eines Mediums, in welches das Feststellbauteil zumindest teilweise eintaucht, fixiert wird, was dadurch erreicht wird, daß das Medium aus einem flüssigen Zustand in einen verfestigten Zustand überführt wird. Der verfestigte Zustand ist im Vergleich zu dem flüssigen Zustand beispielsweise dadurch näher zu beschreiben, daß das Medium eine gegenüber dem flüssigen Zustand erhöhte Viskosität aufweist oder sogar durch Festkörpereigenschaften charakterisiert ist. Auf diese Weise wird über das Feststellbauteil eine Feststellkraft auf das verlagerbare Bauteil in der Endstellung eingeleitet. Das verlagerbare Bauteil wird in der Endstellung relativ zu dem Vorrat des Mediums in einer Ruhestellung arretiert. Wenn der Behälter, in dem der Vorrat des Mediums gebildet ist, seinerseits zu einem anderen Bezugssystem in Ruhe ist, bei dem es sich im Fall des Untersuchungssystems beispielsweise um ein Gerätgestell oder ein anderes Bauteil handeln kann, wird auch das verlagerbare Bauteil in der Endstellung relativ zu dem Bezugssystem in Ruhe gehalten. Störende Einflüsse auf das verlagerbare Bauteil in der Endstellung, die dazu führen können, daß sich das verlagerbare Bauteil in ungewünschter Art und Weise aus der Endstellung herausbewegt, werden gedämpft oder sogar vollständig unterdrückt.

Die Sicherung der Ruhestellung des verlagerbaren Bauteils in der Endstellung in der vorgeschlagenen Art und Weise ermöglicht mit hoher Präzision die Lage des verlagerbaren Bauteils in der Endstellung beizubehalten. Eine solche Präzision ist zum Bespiel in Verbindung mit verschiedensten experimentellen Untersuchungen gewünscht. Beispielsweise wird so eine verbesserte Kraft-Abstands-Spektroskopie ermöglicht, da störende Bewegungen des verlagerbaren Bauteils unterbunden sind.

Eine bevorzugte Weiterbildung der Erfindung sieht vor, daß als Medium ein Medium wenigstens einer Materialart entsprechend ausgewählt aus der folgenden Gruppe von Materialarten verwendet wird: rheologisches Material wie elektrorheologisches Material oder magnetorheologisches Material und Bingham-Körper. Bei einem Bingham-Körper handelt es sich um ein Medium, welches eine nicht-newtonsche Flüssigkeit ist und erst bei Überschreiten der Fließgrenze, d. h. einer bestimmten Schubspannung, zu fließen beginnt. Beispiele für nicht-newtonsche Medien sind Sole, Gele, Suspensionen höherer Konzentration, Kunststoffe, Lösungen oder Schmelzen von makromolekularen Stoffen. Die Fließgrenze ihrerseits ist eine Materialkenngröße, die die Mindestschubspannung angibt, die aufgewendet werden muß, damit das Material fließt. Rheologische Materialien im Sinne der vorliegenden Anmeldung werden aus einem flüssigen in einen verfestigten Zustand überführt, indem beispielsweise eine elektrische Spannung (elektrische Feldstärke) oder eine Magnetkraft (magnetische Feldstärke) angelegt werden. Hierbei wird die Fließgrenze mittels Ändern der beaufschlagten Stellgröße angehoben.

Bei einer zweckmäßigen Ausgestaltung der Erfindung kann vorgesehen sein, daß die Feststellkraft mittels Überführen des Mediums aus dem flüssigen Zustand in den verfestigten Zustand von einer Anfangsfeststellkraft zu einer Endfeststellkraft kontinuierlich erhöht wird. Das kontinuierliche Erhöhen der Feststellkraft, also insbesondere das kontinuierliche Erhöhen der Fließgrenze, ermöglicht ein allmähliches "Hineingleiten" des verlagerbaren Bauteils in eine festgestellte Endstellung. Sofern das verlagerbare Bauteil in der Endstellung zufällige Bewegungen ausführt, die beispielsweise durch zufällige Bewegungen des Aktorelementes induziert werden, werden diese durch das kontinuierliche Erhöhen der Feststellkraft Stück für Stück gedämpft und eingeschränkt.

Eine vorteilhafte Ausführungsform der Erfindung sieht vor, daß die Feststellkraft zufällige Bewegungen des verlagerbaren Bauteils in der Endstellung dämpfend, wahlweise vollständig verhindernd gebildet wird. In welchem Umfang zufällige Bewegungen des verlagerbaren Bauteils in der Endstellung gedämpft werden, kann durch die Wahl der Größe der Feststellkraft anwendungsbezogen eingestellt werden. Die Feststellkraft wirkt allgemein als Gegenkraft zu an dem verlagerbaren Bauteil in der Endstellung angreifenden Kräften, die ihrerseits beim Fehlen der Feststellkraft zu einer Verlagerung des verlagerbaren Bauteils aus der Endstellung führen würden.

Bevorzugt sieht eine Fortbildung der Erfindung vor, daß das Feststellbauteil an das Aktorelement gekoppelt ist und mittels Überführen des Mediums aus dem flüssigen Zustand in den verfestigten Zustand das Aktorelement fixiert wird. In dieser Ausführungsform kann vorgesehen sein, daß die Bewegung des Aktorelementes zur Verlagerung des verlagerbaren Bauteils über das Feststellbauteil an das verlagerbare Bauteil weitergegeben wird. In einer Ausführung sind das Feststellbauteil und das Aktorelement relativ zueinander bewegbar miteinander verbunden. Das Feststellen des verlagerbaren Bauteils in der Endstellung kann dann dadurch erreicht werden, daß mit Hilfe des Mediums in dem verfestigten Zustand das Feststellbauteil und das Aktorelement fixiert werden.

Bei einer vorteilhaften Ausgestaltung der Erfindung kann vorgesehen sein, daß das Aktorelement nach dem Feststellen des verlagerbaren Bauteils in der Endstellung von dem verlagerbaren Bauteil gelöst und das verlagerbare Bauteil nach dem Lösen des Aktorelementes mit Hilfe der Feststellkraft in der Endstellung gehalten wird, wahlweise ausschließlich mittels der Feststellkraft. Mit Hilfe der Feststellkraft kann bei dieser Ausgestaltung insbesondere auch eine ausreichende Haltekraft zur Verfügung gestellt werden, die dem Einfluß der Schwerkraft auf das verlagerbare Bauteil entgegenwirkt. Das verlagerbare Bauteil würde in einer möglichen Ausführung sonst aufgrund der Schwerkraft sich aus der Endstellung herausbewegen. Indem das Aktorelement von dem verlagerbaren Bauteil getrennt wird, ist verhindert, daß zufällige Bewegungen des Aktorelementes in nachteiliger Art und Weise Einfluß auf die Endstellung des verlagerbaren Bauteils nehmen können. So ist es beispielsweise bei Piezo-Stelleinrichtungen bekannt, daß die angelegte elektrische Spannung aufgrund des Rauschens der elektrischen Spannung zu einer hierdurch verursachten Bewegung des Aktorelementes führen kann.

Die Piezo-Stelleinrichtung kann zurückgefahren werden, indem die elektrische Spannung abgeschaltet wird.

Eine Weiterbildung der Erfindung kann vorsehen, daß das Medium aus dem flüssigen Zustand in den verfestigten Zustand überführt wird, indem beim Beaufschlagen des Mediums mit der Stellgröße wenigstens ein Parameter ausgewählt aus der folgenden Gruppe von Parametern eingestellt wird: Temperatur, eingestrahlte elektromagnetischen Wellen, elektrische Spannung und Magnetkraft. Elektromagnetischen Wellen können beispielsweise als Licht eingestrahlt werden. Es können insbesondere die Frequenz der Wellen oder die eingestrahlte Energie eingestellt werden. Auch eine kombinierte Variation dieser Parameter kann vorgesehen sein.

Eine bevorzugte Weiterbildung der Erfindung sieht vor, daß das verlagerbare Bauteil frei von einer mittels Reibung erzeugenden Führungselementen gebildeten Führung in die Endstellung verlagert wird. Reibung erzeugende Führungselemente sind beispielsweise Führungsschienen, die das zu verlagernde Bauteil beim verlagern zwar führen, andererseits jedoch zu ungewünschten Reibungseffekten und Einschränkungen hinsichtlich der Positioniergenauigkeit oder der Freiheitsgrade der Verlagerungsbewegung führen können. Bevorzugt ist das verlagerbare Bauteil in einer Ausgestaltung mit Hilfe von Aktorelementen in zwei oder allen drei Raumrichtungen frei positionierbar.

Bei einer zweckmäßigen Ausgestaltung der Erfindung kann vorgesehen sein, daß das Feststellbauteil als Element eines Mechanismus ausgewählt aus der folgenden Gruppe von Mechanismen gebildet ist: Gelenkmechanismus und Teleskopmechanismus. Es kann beispielsweise vorgesehen sein, den Gelenkmechanismus wenigstens teilweise in das Medium einzutauchen und mittels Überführen des Mediums aus dem flüssigen in den verfestigten Zustand "einzufrieren". In ähnlicher Weise kann ein Teleskopmechanismus, mit dem eine Längenveränderung einer Verbindung ausführbar ist, "eingefroren" werden.

Eine vorteilhafte Ausführungsform der Erfindung sieht vor, daß mit dem Verlagern des verlagerbaren Bauteils zumindest eine Betriebsfunktion ausgewählt aus der folgenden Gruppe von Betriebsfunktionen ausgeführt wird: Verlagerung einer Meßprobenaufnahme und Verlagerung einer Meßsondenaufnahme. Es sind vielfältige Untersuchungsprozesse bekannt, bei denen eine Meßsonde und eine Meßprobe relativ zueinander bewegt werden müssen, sei es um eine bestimmte Untersuchungskonfiguration vor Untersuchungsbeginn herzustellen oder während der Untersuchung selbst. Insbesondere sei die Rastersondenmikroskopie hier genannt.

Nachfolgend werden vorteilhafte Ausgestaltungen der Vorrichtung zum Positionieren eines verlagerbaren Bauteils in einem Untersuchungssystem näher erläutert. Ausgestaltungen und Vorteile ergeben sich für die Ausführungsformen der Vorrichtung entsprechend den zugehörigen Verfahrensvarianten.

Eine bevorzugte Weiterbildung der Erfindung sieht vor, daß das Medium ein Medium wenigstens einer Materialart ausgewählt aus der folgenden Gruppe von Materialarten entspricht: rheologisches Material wie elektrorheologisches Material oder magnetorheologisches Material und Bingham-Körper.

Bei einer zweckmäßigen Ausgestaltung der Erfindung kann vorgesehen sein, daß die Feststelleinrichtung konfiguriert ist, die Feststellkraft mittels Überführen des Mediums aus dem flüssigen Zustand in den verfestigten Zustand von einer Anfangsfeststellkraft zu einer Endfeststellkraft kontinuierlich zu erhöhen.

Eine vorteilhafte Ausführungsform der Erfindung sieht vor, daß die Feststelleinrichtung konfiguriert ist, die Feststellkraft zufällige Bewegungen des verlagerbaren Bauteils in der Endstellung dämpfend, wahlweise vollständig verhindernd auszubilden.

Bevorzugt sieht eine Fortbildung der Erfindung vor, daß das Feststellbauteil an das Aktorelement gekoppelt ist, welches mittels Überführen des Mediums aus dem flüssigen Zustand in den verfestigten Zustand das Aktorelement fixierbar ist.

Bei einer vorteilhaften Ausgestaltung der Erfindung kann vorgesehen sein, daß das Aktorelement nach dem Feststellen des verlagerbaren Bauteils in der Endstellung von dem verlagerbaren Bauteil lösbar und das verlagerbare Bauteil nach dem Lösen des Aktorelementes mit Hilfe der Feststellkraft in der Endstellung haltbar ist, wahlweise ausschließlich mittels der Feststellkraft. Eine alternative Ausgestaltung, die in einer Ausführung auch als eine Art Vorstufe zum Lösen des Aktorelementes von dem verlagerbaren Bauteil vorgesehen sein kann, wird das Aktorelement nach dem Feststellen nicht länger mit der Antriebskraft beaufschlagt, diese wird vielmehr abgeschalten. Im Fall eines elektrischen Antriebs bedeutet dieses beispielsweise, daß die elektrische Antriebsspannung abgeschalten wird. Trotz Abschalten der Antriebskraft kann das Aktorelement dann mit dem verlagerbaren Bauteil verbunden bleiben, beispielsweise im Fall einer festen Kopplung zwischen Aktorelement und verlagerbarem Bauteil.

Eine Weiterbildung der Erfindung kann vorsehen, daß die Steuereinrichtung konfiguriert ist, beim Beaufschlagen des Mediums mit der Stellgröße wenigstens ein Parameter ausgewählt aus der folgenden Gruppe von Parametern einzustellen: Temperatur, eingestrahlte elektromagnetischen Wellen, elektrische Spannung und Magnetkraft.

Eine bevorzugte Weiterbildung der Erfindung sieht vor, daß das verlagerbare Bauteil frei von einer mittels Reibung erzeugenden Führungselementen gebildeten Führung in die Endstellung verlagerbar ist.

Bei einer zweckmäßigen Ausgestaltung der Erfindung kann vorgesehen sein, daß das Feststellbauteil als Element eines Mechanismus ausgewählt aus der folgenden Gruppe von Mechanismen gebildet ist: Gelenkmechanismus und Teleskopmechanismus.

Eine vorteilhafte Ausführungsform der Erfindung sieht vor, daß das verlagerbare Bauteil als ein Funktionsbauteil ausgewählt aus der folgenden Gruppe von Funktionsbauteilen ausgeführt ist: Meßprobenaufnahme und Meßsondenaufnahme.

Bevorzugt sieht eine Fortbildung der Erfindung vor, daß das Aktorelement an ein piezoelektrisch betriebenes Stellelement gekoppelt ist, wahlweise von diesem gebildet ist.

Es kann vorgesehen sein, daß eine Vorrichtung zum Positionieren eines verlagerbaren Bauteils in einer der vorangehend beschriebenen Ausführungen selbst auf einem weiteren verlagerbaren Bauteil angeordnet ist, welches dann seinerseits gemäß den vorstehenden Ausführungen relativ zu einem feststehenden Bauteil verlagert wird. Eine derartige Anordnung entsteht beispielsweise, wenn zwei x-y-z-Abtasteinrichtungen, die auch als Scanner bezeichnet werden, miteinander kombiniert werden. Hierdurch können beispielsweise schnellere Abtastbewegungen ausgeführt werden, auch wenn dann nur kleinere Abtastbereiche durchfahren werden können. Es können so Positioniereinrichtungen miteinander kombiniert werden, bei denen eine Positioniereinrichtung eine Grobeinstellung und eine mit dieser kombinierte, weitere Positioniereinrichtung dann die Feineinstellung übernimmt. Beide Positioniereinrichtungen sind für sich nach einer der vorangehend beschriebenen Ausführungsarten gestaltet.

### Beschreibung bevorzugter Ausführungsbeispiele der Erfindung

Die Erfindung wird im folgenden anhand von Ausführungsbeispielen unter Bezugnahme auf Figuren einer Zeichnung näher erläutert. Hierbei zeigen:
- Fig. 1a bis 1 c: eine schematische Darstellung einer Anordnung mit einem Gestell und einem hierzu relativ verlagerbaren Bauteil in einer Ausgestaltung;
- Fig. 2a und 2b: eine schematische Darstellung einer Anordnung mit einem Gestell und einem hierzu relativ verlagerbaren Bauteil in einer weiteren Ausgestaltung; und
- Fig. 3: eine schematische Darstellung einer Anordnung mit einem Gestell und einem hierzu relativ verlagerbaren Bauteil, auf welchem eine weitere Positionierein- richtung gebildet ist.

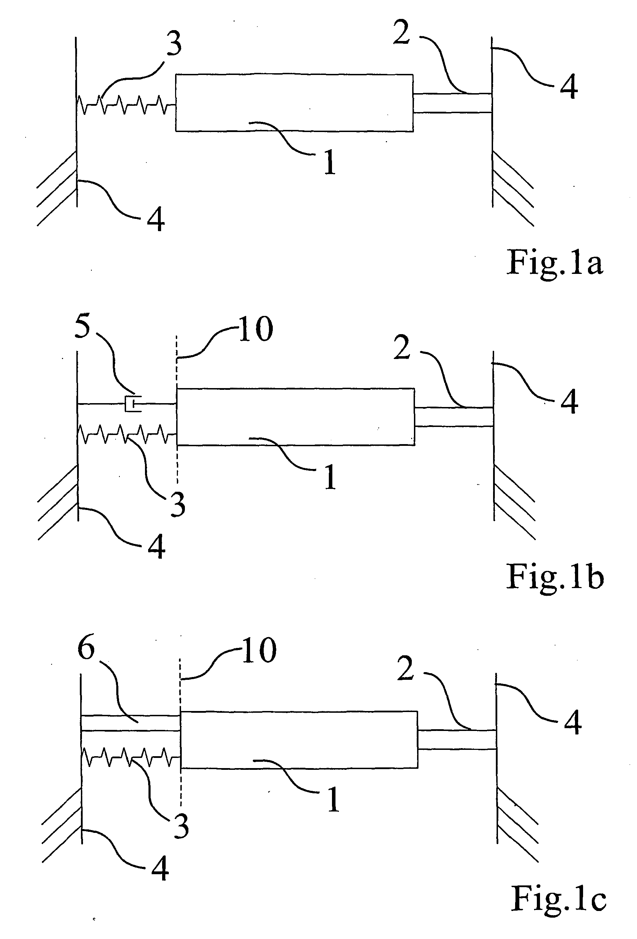

Fig. 1a bis 1b zeigen eine schematische Darstellung einer Anordnung mit einem Gestell und einem hierzu relativ verlagerbaren Bauteil in einer Ausgestaltung.

Gemäß Fig. 1a ist ein verlagerbares Bauteil 1 über ein Aktorelement 2 und eine Feder 3 mit einem ortsfest gebildeten Gestell 4 verbunden. Die Feder 3 kann in einer anderen Ausgestaltung (nicht dargestellt) auch weggelassen werden. Das verlagerbare Bauteil 1 kann dann das Aktorelement 2 aufgeschraubt oder aufgeklebt sein.

Gemäß Fig. 1b wird durch ein Feststellmittel 5 in einer gewünschten Endstellung eine reversible, Dämpfung oder Bewegungshemmung eingeführt, die zeitlich variabel gesteuert werden kann.

Gemäß Fig. 1c ist mit Hilfe der Feststellmittel 5 dann eine Feststellverbindung 6 zwischen dem verlagerbaren Bauteil 1 und dem Gestell 4 gebildet. Zufällige Bewegungsanstöße, die beispielsweise durch das Aktorelement 2 hervorgerufen werden können, werden mit Hilfe der Feststellverbindung 6 unterbunden. Das Verhalten des Aktorelementes 2 und der Feder 3 sind dann nicht mehr von Belang. Der Übergang der Feststellmittel 5 in die Feststellverbindung 6 ist so ausgelegt, daß der Einfluß der mit Hilfe der Feststellmittel 5 aufgebrachten Feststellkraft stetig zunimmt und hierdurch der Einfluß des Aktorelementes 2 stetig abnimmt. Auf diese Weise werden Verspannungen zwischen dem verlagerbaren Bauteil 1 und dem Gestell 4 vermieden, die sonst zu einer Verlagerung des verlagerbaren Bauteils 1 aus einer Endstellung 10 herausführen könnten.

In den Fig. 1a bis 1c ist eine eindimensionale Verlagerung dargestellt. In analoger Weise können Verlagerungen des verlagerbaren Bauteils 1 vorgesehen sein, bei denen eine Positionsänderung in mehr als einer räumlichen Dimension erfolgt, zum Beispiel in einer Ebene. Die Anzahl der Feststellverbindungen muß dann nicht notwendigerweise mit der Anzahl der zu arretierenden Achsen oder Freiheitsgrade übereinstimmen.

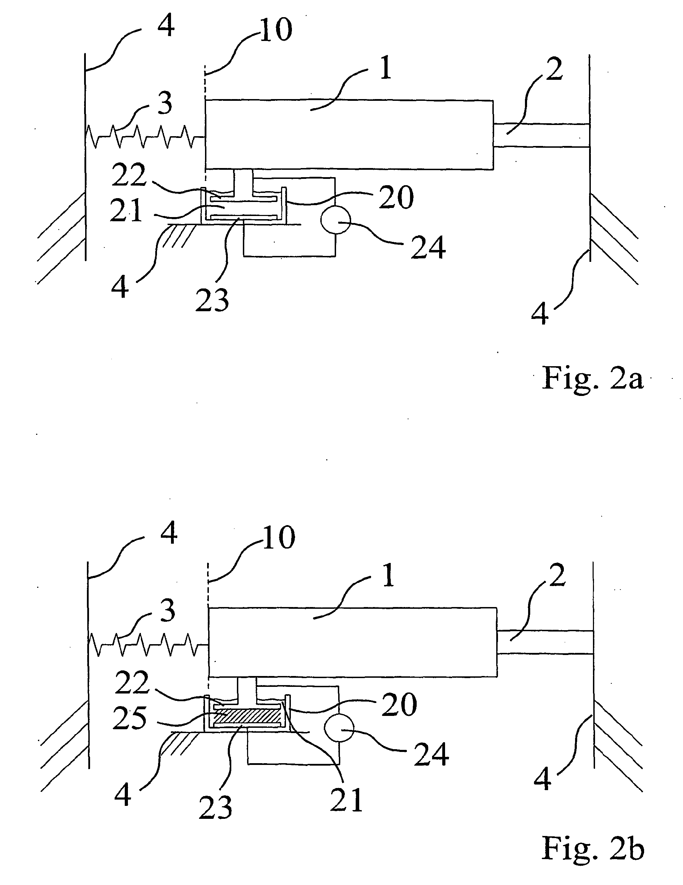

Fig. 2a und 2b zeigen eine schematische Darstellung einer Anordnung mit einem Gestell und einem hierzu relativ verlagerbaren Bauteil in einer weiteren Ausgestaltung.

Die bei der Anordnung gemäß den Fig. 1a bis 1c vorgesehenen Feststellmittel 5 und die Feststellverbindung 6 sind durch einen Bingham-Körper in Form einer elektrorheologischen Flüssigkeit ersetzt. Gemäß Fig. 2a ist in einem Gefäß 20 eine elektrorheologische Flüssigkeit aufbewahrt. In das Gefäß 20 tauchen zwei Elektroden 22, 23 ein, die mit einer Spannungsquelle 24 verbunden sind. In Abhängigkeit von der an die beiden Elektroden 22, 23 mit Hilfe der Spannungsquelle 24 angelegten Spannung wird in der elektrorheologischen Flüssigkeit 21 eine Versteifung induziert, welche gemäß Fig. 2 letztlich zur Ausbildung einer Feststellverbindung 25 führt. Das Gefäß 20 ist fest mit dem Gestell 4 verbunden.

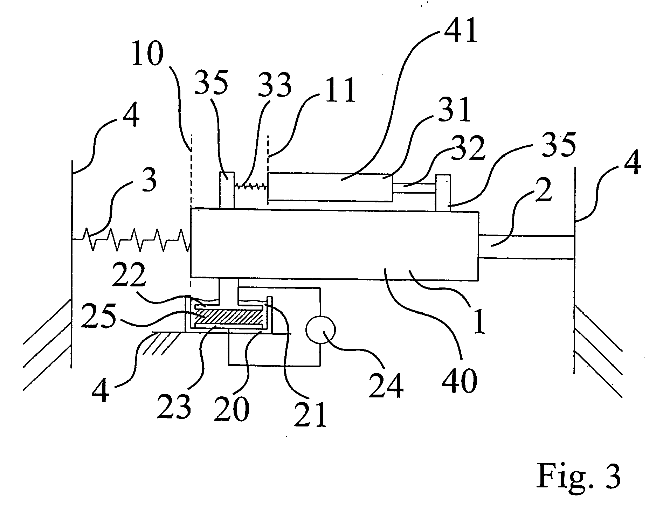

Fig. 3 zeigt eine schematische Darstellung einer Anordnung mit einem Gestell und einem hierzu relativ verlagerbaren Bauteil, auf welchem eine weitere Positioniereinrichtung gebildet ist. Für gleiche Merkmale werden in Fig. 3 dieselben Bezugszeichen wie in den vorangehenden Figuren verwendet.

Zwei Positioniereinrichtungen, bei denen es sich im dargestellten Ausführungsbeispiel um Scanner handelt, kommen zum Einsatz. Ein unterer Scanner 40 kann gemäß dem vorangehend beschriebenen Verfahren verlagert und dann fixiert werden, wodurch die Endstellung 10 relativ zum Gestell 4 definiert ist. Ein oberer Scanner 41 mit einem zu bewegenden Bauteil 31, einem Stellelement 32 und einer Feder 33 ist über Bauelemente 35 an ein verlagerbares Bauteil 1 des unteren Scanners 40 gekoppelt. Auf diese Weise kann der obere Scanner 41 sich um eine Mittelposition 11 bewegen, ohne daß die Endstellung 10 verändert oder gestört wird.

In der Fig. 3 ist zur Vereinfachung nur eine Achse eingezeichnet. Aber auch die Feststellung eines x-y-Scanners 1, 2, 3 und das Betreiben eines schnellen x-y-z-Scanners mit geringer Auslenkung 31, 32, 33 kann vorgesehen sein.

Ein Vorteil der Ausführung besteht darin, daß die Endstellung 10 gegenüber dem Gestell 4 mit großer Präzision eingestellt werden kann, somit auch die Endstellung 11. Auf diese Weise können die Vorteile des nicht fixierbaren Scanners ausgenutzt werden, wie zum Beispiel hohe Abtastgeschwindigkeit, ohne das der fixierte Scanner die Bewegung stört. Andererseits können die Vorteile des fixierbaren Scanners wie beispielsweise ein großer Abtastbereich ausgenutzt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Positionieren eines verlagerbaren Bauteils in einem Untersuchungssystem, insbesondere einem Meß- oder Analysesystem, bei dem:
- das verlagerbare Bauteil (1) mit Hilfe eines an das verlagerbare Bauteil (1) gekoppelten Aktorelementes (2) aus einer Ausgangsstellung in eine Endstellung (10) verlagert wird, indem das Aktorelement (2) mittels einer Antriebskraft bewegt wird, und
- das verlagerbare Bauteil (1) über ein mit dem verlagerbaren Bauteil (1) in Verbindung stehendes Feststellbauteil mit einer das verlagerbare Bauteil (1) in der Endstellung (10) feststellenden Feststellkraft beaufschlagt wird, indem das Feststellbauteil zumindest teilweise in einen Vorrat eines Mediums eintaucht und in dem Medium mittels Überführen des Mediums aus einem flüssigen Zustand in einen verfestigten Zustand fixiert wird, wobei das Medium mittels Beaufschlagen mit einer Stellgröße aus dem flüssigen Zustand in den verfestigten Zustand überführt wird.

2. Verfahren nach Anspruch 1, **dadurch gekennzeichnet, daß** als Medium ein Medium wenigstens einer Materialart entsprechend ausgewählt aus der folgenden Gruppe von Materialarten verwendet wird: rheologisches Material wie elektrorheologisches Material oder magnetorheologisches Material und Bingham-Körper.

3. Verfahren nach Anspruch 1 oder 2, **dadurch gekennzeichnet, daß** die Feststellkraft mittels Überführen des Mediums aus dem flüssigen Zustand in den verfestigten Zustand von einer Anfangsfeststellkraft zu einer Endfeststellkraft kontinuierlich erhöht wird.

4. Verfahren nach einem der vorangehenden Ansprüche, **dadurch gekennzeichnet, daß** die Feststellkraft zufällige Bewegungen des verlagerbaren Bauteils (1) in der Endstellung (10) dämpfend, wahlweise vollständig verhindernd gebildet wird.

5. Verfahren nach einem der vorangehenden Ansprüche, **dadurch gekennzeichnet, daß** das Feststellbauteil an das Aktorelement (2) gekoppelt ist und mittels Überführen des Mediums aus dem flüssigen Zustand in den verfestigten Zustand das Aktorelement (2) fixiert wird.

6. Verfahren nach einem der Ansprüche 1 bis 4, **dadurch gekennzeichnet, daß** das Aktorelement (2) nach dem Feststellen des verlagerbaren Bauteils (1) in der Endstellung (10) von dem verlagerbaren Bauteil (1) gelöst und das verlagerbare Bauteil (1) nach dem Lösen des Aktorelementes (2) mit Hilfe der Feststellkraft in der Endstellung (10) gehalten wird, wahlweise ausschließlich mittels der Feststellkraft.

7. Verfahren nach einem der vorangehenden Ansprüche, **dadurch gekennzeichnet, daß** das Medium aus dem flüssigen Zustand in den verfestigten Zustand überführt wird, indem beim Beaufschlagen des Mediums mit der Stellgröße wenigstens ein Parameter ausgewählt aus der folgenden Gruppe von Parametern eingestellt wird: Temperatur, eingestrahlte elektromagnetischen Wellen, elektrische Spannung und Magnetkraft.

8. Verfahren nach einem der vorangehenden Ansprüche, **dadurch gekennzeichnet, daß** das verlagerbare Bauteil (1) frei von einer mittels Reibung erzeugenden Führungselementen gebildeten Führung in die Endstellung (10) verlagert wird.

9. Verfahren nach einem der vorangehenden Ansprüche, **dadurch gekennzeichnet, daß** das Feststellbauteil als Element eines Mechanismus ausgewählt aus der folgenden Gruppe von Mechanismen gebildet ist: Gelenkmechanismus und Teleskopmechanismus.

10. Verfahren nach einem der vorangehenden Ansprüche, **dadurch gekennzeichnet, daß** mit dem Verlagern des verlagerbaren Bauteils (1) zumindest eine Betriebsfunktion ausgewählt aus der folgenden Gruppe von Betriebsfunktionen ausgeführt wird: Verlagerung einer Meßprobenaufnahme und Verlagerung einer Meßsondenaufhahme.

11. Vorrichtung zum Positionieren eines verlagerbaren Bauteils in einem Untersuchungssystem, insbesondere einem Meß- oder Analysesystem, mit:
- einem verlagerbaren Bauteil (1),
- einem an das verlagerbare Bauteil (1) gekoppelten Aktorelement (2), welches bewegbar ist, um das verlagerbare Bauteil (1) aus einer Ausgangstellung in eine Endstellung (10) zu verlagern, und
- einer Feststelleinrichtung mit:
- einem Feststellbauteil, welches mit dem verlagerbaren Bauteil (1) in Verbindung steht,
- einem Vorrat eines Mediums, in welches das Feststellbauteil wenigstens teilweise eingetaucht werden kann, und
- einer Steuereinrichtung, die konfiguriert ist, das Medium mit einer Stellgröße zu beaufschlagen, um das Medium zwischen einem flüssigen Zustand und einem verfestigten Zustand, wahlweise bis hin zu einer Festkörperausprägung, zu überführen.

12. Vorrichtung nach Anspruch 11, **dadurch gekennzeichnet, daß** das Medium ein Medium wenigstens einer Materialart ausgewählt aus der folgenden Gruppe von Materialarten entspricht: rheologisches Material wie elektrorheologisches Material oder magnetorheologisches Material und Bingham-Körper.

13. Vorrichtung nach Anspruch 11 oder 12, **dadurch gekennzeichnet, daß** die Feststelleinrichtung konfiguriert ist, die Feststellkraft mittels Überführen des Mediums aus dem flüssigen Zustand in den verfestigten Zustand von einer Anfangsfeststellkraft zu einer Endfeststellkraft kontinuierlich zu erhöhen.

14. Vorrichtung nach einem der Ansprüche 11 bis 13, **dadurch gekennzeichnet, daß** die Feststelleinrichtung konfiguriert ist, die Feststellkraft zufällige Bewegungen des verlagerbaren Bauteils (1) in der Endstellung (10) dämpfend, wahlweise vollständig verhindernd auszubilden.

15. Vorrichtung nach einem der Ansprüche 11 bis 14, **dadurch gekennzeichnet, daß** das Feststellbauteil an das Aktorelement (2) gekoppelt ist, welches mittels des Überführens des Mediums aus dem flüssigen Zustand in den verfestigten Zustand das Aktorelement (2) fixierbar ist.

16. Vorrichtung nach einem der Ansprüche 11 bis 14, **dadurch gekennzeichnet, daß** das Aktorelement (2) nach dem Feststellen des verlagerbaren Bauteils (1) in der Endstellung (10) von dem verlagerbaren Bauteil (1) lösbar und das verlagerbare Bauteil (1) nach dem Lösen des Aktorelementes (2) mit Hilfe der Feststellkraft in der Endstellung (10) haltbar ist, wahlweise ausschließlich mittels der Feststellkraft.

17. Vorrichtung nach einem der Ansprüche 11 bis 16, **dadurch gekennzeichnet, daß** die Steuereinrichtung konfiguriert ist, beim Beaufschlagen des Mediums mit der Stellgröße wenigstens ein Parameter ausgewählt aus der folgenden Gruppe von Parametern einzustellen: Temperatur, eingestrahlte elektromagnetischen Wellen, elektrische Spannung und Magnetkraft.

18. Vorrichtung nach einem der Ansprüche 11 bis 17, **dadurch gekennzeichnet, daß** das verlagerbare Bauteil (1) frei von einer mittels Reibung erzeugenden Führungselementen gebildeten Führung in die Endstellung (10) verlagerbar ist.

19. Vorrichtung nach einem der Ansprüche 11 bis 18, **dadurch gekennzeichnet, daß** das Feststellbauteil als Element eines Mechanismus ausgewählt aus der folgenden Gruppe von Mechanismen gebildet ist: Gelenkmechanismus und Teleskopmechanismus.

20. Vorrichtung nach einem der Ansprüche 11 bis 19, **dadurch gekennzeichnet, daß** das verlagerbare Bauteil (1) als ein Funktionsbauteil ausgewählt aus der folgenden Gruppe von Funktionsbauteilen ausgeführt ist: Meßprobenaufnahme und Meßsondenaufnahme.

21. Vorrichtung nach einem der Ansprüche 11 bis 20, **dadurch gekennzeichnet, daß** das Aktorelement (2) an ein piezoelektrisch betriebenes Stellelement gekoppelt ist.

## Claims

1. A method for the positioning of a displaceable component in an examining system, particularly a measuring or an analytic system, where:
- the displaceable component (1) is displaced out of a home position into an end position (10) with the support of an actuating element (2) coupled to the displaceable component (1), wherein the actuating element (2) is moved by means of a drive force, and
- the displaceable component (1), by way of a fixation component connected to the displaceable component (1), is impacted with a fixation force fixating the displaceable component (1) in the end position (10), wherein the fixation component is at least partially immersed in a reservoir of a medium and is fixed-positioned in the medium by means of a transformation of the medium from a liquid state into a solidified state wherein the medium, by means of the impact-application with a manipulated variable, is transformed from the liquid state into the solidified state.

2. The method according to Claim 1, **characterised in that**, as a medium, a medium of at least one material type correspondingly selected from the following group of material types is adopted: rheological material such as electro-rheological material or magnetic-rheological material and Bingham-body.

3. The method according to Claims 1 or 2, **characterised in that**, the fixation force is continually increased by means of the transformation of the medium from the liquid state into the solidified state from an initial fixation force to and end fixation force.

4. The method according to any one of the preceding Claims, **characterised in that**, the fixation device is configured to form the fixation force subduing incidental movements of the displaceable component in the end position, selectively with complete prevention.

5. The method according to any one of the preceding Claims, **characterised in that**, the fixation component is coupled to the actuating element (2) and the actuating element (2) is fixed-positioned by means of the transformation of the medium from the liquid state into the solidified state.

6. The method according to any one of the Claims 1 to 4, **characterised in that**, the actuating element (2), after the fixation of the displaceable component (1) in the end position (10), is detached from the displaceable component (1) and the displaceable component (1) after the detachment of the actuating element (2) is maintained in the end position (10) with the support of the fixation force, selectively and exclusively by means of the fixation force.

7. The method according to any one of the preceding Claims, **characterised in that**, the medium is transformed from the liquid state into the solidified state wherein, with the impact of the medium with the manipulated variable, at least one parameter selected from the following group of parameters is set: temperature, in-beamed electromagnetic waves, electric voltage and magnetic force.

8. The method according to any one of the preceding Claims, **characterised in that**, the displaceable component (1) is moved into the end position (10) free from a guiding formed from guide elements producing friction.

9. The method according to any one of the preceding Claims, **characterised in that**, the fixation component is formed as an element of a mechanism selected from the following group of mechanisms: joint mechanism and telescope mechanism.

10. The method according to any one of the preceding Claims, **characterised in that**, with the displacement of the displaceable component (1), at least one operating function selected from the following group of operating functions is performed: displacement of a measuring sampling and displacement of a measuring probe.

11. A device for the positioning of a displaceable component in an examining system, particularly a measuring or an analytic system, with:
- a displaceable component (1),
- an actuating element (2) coupled to the displaceable component (1), where this actuating element (2) is moveable in order to displace the displaceable component (1) out of a home position into an end position (10), and
- a fixation device with:
- a fixation component which is connected to the displaceable component (1),
- a reservoir of a medium in which the fixation component can be at least partially submerged, and
- a control device which is configured for impacting the medium with a manipulated variable in order to transform the medium between a liquid state and a solidified state, selectively all the way up to a solid body characterisation.

12. The device according to Claim 11, **characterised in that**, the medium is a medium of at least one material type correspondingly selected from the following group of material types: rheological material such as electro-rheological material or magnetic-rheological material and Bingham-body.

13. The device according to Claims 11 or 12, **characterised in that** the fixation device is configured in order to continually increase the fixation force by means of a transformation of the medium from the liquid state into the solidified state from an initial fixation force to an end fixation force.

14. The device according to any one of the Claims 11 to 13, **characterised in that**, the fixation device is configured to form the fixation force subduing incidental movements of the displaceable component (1) in the end position (10), selectively with complete prevention.

15. The device according to any one of the Claims 11 to 14, **characterised in that**, the fixation component is coupled to the actuating element (2) and the actuating element (2) can be fixed-positioned by means of the transformation of the medium from the liquid state into the solidified state.

16. The device method according to any one of the Claims 11 to 14, **characterised in that**, the actuating element (2), after the fixation of the displaceable component (1) in the end position (10), can be detached from the displaceable component (1) and the displaceable component (1) after the detachment of the actuating element (2) can be maintained in the end position (10) with the support of the fixation force, selectively and exclusively by means of the fixation force.

17. The device according to any one of the Claims 11 to 16, **characterised in that**, the control device is configured, with the impact of the medium with the manipulated variable, to set at least one parameter selected from the following group of parameters: temperature, in-beamed electromagnetic waves, electric voltage and magnetic force.

18. The device according to any one of the Claims 11 to 17, **characterised in that**, the displaceable component (1) can be moved into the end position (10) free from a guiding formed from guide elements producing friction.

19. The device according to any one of the Claims 11 to 18, **characterised in that**, the fixation component is formed as an element of a mechanism selected from the following group of mechanisms: joint mechanism and telescope mechanism.

20. The device according to any one of the Claims 11 to 19, **characterised in that**, the displaceable component (1) is executed as a functional component selected from the following group of functional components: measuring sampling and measuring probe.

21. The device according to any one of the Claims 11 to 20, **characterised in that** the actuating element (2) is coupled to a piezo-electrically operated setting element.

## Revendications

1. Procédé pour le positionnement d'un composant déplaçable dans un système d'examen, en particulier un système de mesure ou d'analyse, dans lequel :
- le composant déplaçable (1) est déplacé à l'aide d'un élément acteur (2) couplé au composant déplaçable (1) d'une position de départ à une position finale (10) par déplacement de l'élément acteur (2) au moyen d'une force motrice, et
- le composant déplaçable (1) est soumis par l'intermédiaire d'un composant de fixation relié au composant déplaçable (1) à une force d'immobilisation qui immobilise le composant déplaçable (1) à la position finale (10) par ce que le composant de fixation plonge au moins partiellement dans une réserve d'un milieu et est fixé dans le milieu en faisant passer le milieu d'un état liquide à un état consolidé, étant donné qu'on fait passer le milieu de l'état liquide à l'état consolidé en y appliquant une grandeur réglante.

2. Procédé selon la revendication 1, **caractérisé en ce qu'**on utilise comme milieu un milieu composé au moins d'un type de matériau sélectionné dans le groupe de types de matériaux suivant : Matériau rhéologique comme matériau électro-rhéologique ou matériau magnéto-rhéologique et corps de Bingham.

3. Procédé selon la revendication 1 ou 2, **caractérisé en ce que** la force d'immobilisation est augmentée continuellement d'une force d'immobilisation de départ à une force d'immobilisation finale en faisant passer le milieu de l'état liquide à l'état consolidé.

4. Procédé selon l'une quelconque des revendications précédentes, **caractérisé en ce que** la force d'immobilisation est formée de manière à atténuer ou, facultativement, empêcher complètement des mouvements aléatoires du composant déplaçable (1) en position finale.

5. Procédé selon l'une quelconque des revendications précédentes, **caractérisé en ce que** le composant de fixation est couplé à l'élément acteur (2) et l'élément acteur (2) est fixé en faisant passer le milieu de l'état liquide à l'état consolidé.

6. Procédé selon l'une quelconque des revendications 1 à 4, **caractérisé en ce que** l'élément acteur 82) est détaché du composant déplaçable (1) après l'immobilisation du composant déplaçable (1) à la position finale et le composant déplaçable (1) est maintenu à la position finale (10) à l'aide de la force d'immobilisation après le détachement de l'élément acteur (2), facultativement exclusivement par la force d'immobilisation.

7. Procédé selon l'une quelconque des revendications précédentes, **caractérisé en ce qu'**on fait passer le milieu de l'état liquide à l'état consolidé en réglant, lorsqu'on applique la grandeur réglante au milieu, au moins un paramètre sélectionné dans le groupe de paramètres suivant : température, ondes électromagnétiques irradiées, tension électrique et force magnétique.

8. Procédé selon l'une quelconque des revendications précédentes, **caractérisé en ce que** le composant déplaçable (1) est déplacé à la position finale (10) sans guidage formé par des éléments de guidage qui créent un frottement.

9. Procédé selon l'une quelconque des revendications précédentes, **caractérisé en ce que** le composant de fixation est formé comme élément d'un mécanisme sélectionné dans le groupe de mécanismes suivant : mécanisme d'articulation et mécanisme télescopique.

10. Procédé selon l'une quelconque des revendications précédentes, **caractérisé en ce qu'**au moins une fonction de service sélectionnée dans le groupe de fonctions de service suivant est exécutée avec le déplacement du composant déplaçable (1) :
déplacement d'un logement d'échantillon de mesure et déplacement d'un logement de sonde de mesure.

11. Dispositif pour le positionnement d'un composant déplaçable dans un système d'examen, en particulier un système de mesure ou d'analyse, avec:
- un composant déplaçable (1),
- un élément acteur (2) couplé au composant déplaçable (1), élément acteur qui peut être mis en mouvement afin de déplacer le composant déplaçable (1) d'une position de départ à une position finale (10), et
- un équipement de fixation avec :
- un composant de fixation qui est relié au composant déplaçable (1),
- une réserve d'un milieu dans lequel le composant de fixation peut être immergé au moins partiellement, et
- un équipement de commande qui est configuré de manière à appliquer une grandeur réglante au milieu afin de faire passer le milieu d'un état liquide à un état consolidé, facultativement jusqu'à former un solide.

12. Dispositif selon la revendication 11, **caractérisé en ce que** le milieu correspond à un milieu composé au moins d'un type de matériau sélectionné dans le groupe de types de matériaux suivant : Matériau rhéologique comme matériau électro-rhéologique ou matériau magnéto-rhéologique et corps de Bingham.

13. Dispositif selon la revendication 11 ou 12, **caractérisé en ce que** l'équipement de fixation est configuré de manière à augmenter continuellement la force d'immobilisation d'une force d'immobilisation de départ à une force d'immobilisation finale en faisant passer le milieu de l'état liquide à l'état consolidé.

14. Dispositif selon l'une quelconque des revendications 11 à 13, **caractérisé en ce que** l'équipement de fixation est configuré de manière à ce que la force d'immobilisation atténue ou, facultativement, empêche complètement des mouvements aléatoires du composant déplaçable (1) en position finale.

15. Dispositif selon l'une quelconque des revendications 11 à 14, **caractérisé en ce que** le composant de fixation est couplé à l'élément acteur (2) et l'élément acteur (2) peut être fixé en faisant passer le milieu de l'état liquide à l'état consolidé.

16. Dispositif selon l'une quelconque des revendications 11 à 14, **caractérisé en ce que** l'élément acteur (2) peut être détaché du composant déplaçable (1) après l'immobilisation du composant déplaçable (1) à la position finale et le composant déplaçable (1) peut être maintenu à la position finale (10) à l'aide de la force d'immobilisation après le détachement de l'élément acteur (2), facultativement exclusivement par la force d'immobilisation.

17. Dispositif selon l'une quelconque des revendications 11 à 16, **caractérisé en ce que** l'équipement de commande est configuré de manière à régler, lorsqu'on applique la grandeur réglante au milieu, au moins un paramètre sélectionné dans le groupe de paramètres suivant : température, ondes électromagnétiques irradiées, tension électrique et force magnétique.

18. Dispositif selon l'une quelconque des revendications 11 à 17, **caractérisé en ce que** le composant déplaçable (1) peut être déplacé à la position finale (10) sans guidage formé par des éléments de guidage qui créent un frottement.

19. Dispositif selon l'une quelconque des revendications 11 à 18, **caractérisé en ce que** le composant de fixation est formé comme élément d'un mécanisme sélectionné dans le groupe de mécanismes suivant : mécanisme d'articulation et mécanisme télescopique.

20. Dispositif selon l'une quelconque des revendications 11 à 19, **caractérisé en ce que** le composant déplaçable (1) est réalisé comme composant fonctionnel sélectionné dans le groupe de composants fonctionnels suivant : logement d'échantillon de mesure et logement de sonde de mesure.

21. Dispositif selon l'une quelconque des revendications 11 à 20, **caractérisé en ce que** l'élément acteur (2) est couplé à un actionneur à commande piézo-électrique.
